# EUROPÄISCHE PATENTSCHRIFT

(11) **EP 0 327 889 B1**
(45) Veröffentlichungstag und Bekanntmachung des Hinweises auf die Patenterteilung: **30.03.1994**
(21) Anmeldenummer: 89101313.8
(22) Anmeldetag: 26.01.1989
(51) Int. Cl.: F24H 1/18, A47J 37/12

(54) **Medien-Heizeinheit**
Heater unit for fluids
Unité pour chauffer des fluides

(30) Priorität: 12.02.1988 DE 3804327
(43) Veröffentlichungstag der Anmeldung: 16.08.1989
(73) Patentinhaber: E.G.O. Elektro-Geräte Blanc u. Fischer, D-75032 Oberderdingen (DE)
(72) Erfinder: Knauss, Hermann, D-7519 Oberderdingen (DE)
(74) Vertreter: Patentanwälte Ruff, Beier, Schöndorf und Mütschele

(56) Entgegenhaltungen:
- EP-A- 0 238 955

## Beschreibung

Die Erfindung betrifft eine Medien-Heizeinheit nach dem Oberbegriff des Patentanspruches 1.

Durch die EP-A2-0 283 955 ist ein Heizungsbausatz mit rohrförmigen Durchlauferhitzern bekannt, bei welchem die Enden der Rohre an den beiden einander gegenüberliegenden plattenförmigen Flanschkörpern z.B. durch Löten befestigt sind. Dieser Heizungsbausatz kann als in sich geschlossene Montage-Baugruppe an gesonderten, übereinanderliegenden Medienkammern befestigt werden, die durch einen geeigneten Medien-Rücklauf miteinander verbunden sind, in welchem das Medium von der oberen in die untere Medienkammer strömt, von welcher aus es dann wieder durch die Durchlauferhitzer in die obere Medienkammer gelangt. Dieser Heizungsbausatz ist für viele Anwendungsfälle sehr günstig. Durch diese Veröffentlichung ist auch eine Ausführungsform bekannt, bei welcher die Flanschplatten einteilig mit einer Rückwand verbunden sind, die allerdings einen Mantelteil eines Kanalkörpers bildet, während die obere Flanschplatte einteilig in die Mantelwand des Medienspeichers übergeht.

Der Erfindung liegt die Aufgabe zugrunde, eine Medien-Heizeinheit der genannten Art zu schaffen, die in vorteilhafter Weise auch für eine solche Anordnung geeignet ist, in welcher die Einlaß- und die Auslaßöffnungen der Durchlauferhitzer unmittelbar in einer einzigen Medienkammer liegen.

Zur Lösung dieser Aufgabe sind die Merkmale des Patentanspruchs 1 vorgesehen. Der Heizungsbausatz braucht nicht an gesonderte, übereinander liegende einzelne, durch Behälter, Wannen oder dergleichen gebildete Kammern angeschlossen werden, sonderen er kann direkt in einen fensterartigen Ausschnitt einer aufrechten und ggf. abgestuften Wand eines einzigen Behälters unmittelbar bzw. mit geringem Abstand oberhalb von dessen Boden eingesetzt werden. Der Heizungsbausatz kann dabei über die gesamte zugehörige Breite dieser Wandung reichen, also an eine oder zwei quer dazu stehende Behälter-Außenwandungen anschließen oder ein oder beide Enden des Heizungsbausatzes können einen seitlichen Abstand von der zugehörigen dieser querstehenden Wandungen haben. Der Heizungsbausatz ragt dabei im Querschnitt zweckmäßig ohne jegliche weitere Abstützung nach Art eines frei abstehenden Kragarmes in den Behälter hinein, wobei die Rückwand zweckmäßig einen relatiy großen Abstand von der gegenüberstehenden Behälter-Außenwandung aufweisen kann, so daß der Bausatz eine an seine Oberseite nach unten anschließende Verengung in dem Behälter bildet, durch welche das Medium nach unten zur Unterseite des Heizungsbausatzes und damit zu dessen Einlaßöffnungen strömt. Außerdem wird dadurch ohne zusätzliche Maßnahmen ein unterhalb des Heizungsbausatzes liegender, verhältnismäßig kühler Sumpf geschaffen, in welchem sich Festpartikel ablagern können. Insbesondere wegen seines profilartigen Querschnittes bildet der die Flanschplatten und die Rückwand aufweisende oder ausschließlich durch diese gebildete Träger des Heizungsbausatzes eine wirksame Verstärkung für den Behälter, so daß auch relativ großvolumige Medienspeicher ohne die Gefahr einer Verformung unter Belastung aus dünnem Blech hergestellt werden können.

Die Heizeinheit kann einen einzigen Durchlauferhitzer bzw. ein einziges Durchlaufrohr aufweisen oder mit zwei oder mehr, in mindestens einer Reihe nebeneinander angeordneten Durchlauferhitzern versehen sein. In jedem Fall kann der Träger dabei auch an mehr als drei, beispielsweise an vier oder fünf quer zueinander liegenden Seiten begrenzt sein, so daß er z.B. rinnen- oder wannenförmig derart ausgebildet ist, daß der Rinne- bzw. Wannenboden durch die Rückwand gebildet ist. Das jeweilige Druchlaufrohr ist zweckmäßig mit seinem oberen und/oder mit seinem unteren Ende so an der zugehörigen Flanschplatte befestigt, daß es über deren in dem Behälter liegende Seite nicht vorsteht, sondern mit dieser Seite im wesentlichen bündig abschließt. Zweckmäßig weist die Flanschplatte für jedes Rohrende einen zum Innern des Medienspeichers vorstehend umgeformten Kragen auf, in den das Rohrende auf einer Länge eingreifen kann, die größer als die Blechdicke der Flanschplatte ist, wobei der Kragen eine stirnseitige Verschweißung an den beiden etwa in einer Ebene liegenden, ringförmigen Stirnflächen des Durchlaufrohres und des Kragens ermöglicht.

Damit die Verbindung zwischen dem Ende des Durchlaufrohres und der Flanschplatte nicht den am weitesten über die zugehörige Seite vorstehenden Teil bildet sowie zur weiteren Versteifung der Flanschplatte weist die untere und/oder die obere Flanschplatte in demjenigen Bereich, in welchem das Durchlaufrohr bzw. die Durchlaufrohre vorgesehen sind, ein gegenüber ihrem Rand über Abkröpfungen abgesetztes Plattenfeld auf. Mindestens ein solches abgesetztes Plattenfeld kann auch an der Rückwand vorgesehen, zu den Durchlaufrohren hin versetzt sowie so ausgebildet sein, daß es ununterbrochen in die abgesetzten Plattenfelder beider Flanschplatten übergeht. Dadurch ist auch ein in einer Ebene liegender, jedoch gegenüber dem größeren Teil der Flanschplatte abgesetzter Befestigungsrand gebildet, mit welchem der Träger an den Wandungen des Medienspeichers befestigt werden kann.

Dehnungsspannungen innerhalb des Trägers der Heizeinheit sowie gegenüber dem übrigen Medienspeicher können auch in vorteilhafter Weise durch entsprechende, zweckmäßig über die Länge des Trägers durchgehende Profilierungen aufgefangen werden, die vorteilhaft im Bereich der Zonen liegen, in welchen die Rückwand in die Flanschplatten übergeht. Eine solche, auch die Biegesteifigkeit des Trägers erhöhende Profilierung kann z. B. sickenartig V-profil-förmig derart ausgebildet sein, daß ein Profilschenkel in der Ebene der zugehörigen Flanschplatte liegt bzw. eine Fortsetzung von dieser bildet, während der andere, spitzwinklig dazu liegende Profilschenkel im stumpfen Winkel in die Rückwand übergeht und die beiden Profilschenkel über einen teilkreisförmig gekrümmten Abschnitt ineinander übergehen. Diese Profilierung steht somit in den Medienspeicher über die übrige Rückwand geringfügig vor.

Eine besonders vorteilfhafte Weiterbildung des Erfindungsgegenstandes besteht darin, daß der Heizeinheit mindestens ein Versteifungsstab für den Medienspeicher zugeordnet ist, wobei mindestens ein Versteifungsstab am Träger bzw. an dessen Rückwand und an der gegenüberliegenden Speicherwandung und/oder in Höhenrichtung unmittelbar benachbart bzw. oberhalb der Heizeinheit an der zuletzt genannten Speicherwandung sowie der dazu etwa parallelen Speicherwandung befestigt sein kann. Dadurch kann auch im Bereich der Austrittsöffnungen der Heizeinheit ein Standrost geschaffen werden, auf welchem beispielsweise ein Fritierkorb in genau definierter Höhe oberhalb der Auslaßöffnungen abgestellt werden kann.

Zur genauen Temperatursteuerung des zu erhitzenden Mediums, das insbesondere eine Flüssigkeit, beispielsweise Öl oder Fett, Wasser, eine Waschlösung oder dergleichen ist, ist wenigstens im Strömungsbereich des die Heizeinheit erwärmt verlassenden Mediums mindestens ein Temperaturfühler eines auf unterschiedliche Temperaturen stufenlos einstellbaren Temperaturreglers angeordnet. Ist dabei für den Temperaturfühler ein gesonderter, zwar vom Medium umspülter, zu dessen Aufheizung jedoch praktisch nicht dienender Fühlerheizkörper vorgesehen, so ergibt eine schnell ansprechende Temperatursteigerung innerhalb enger Temperaturgrenzen bei beispielsweise taktandem Betrieb. Dies wird noch wesentlich verbessert, wenn zwei Temperaturfühler unmittlebar benachbart zueinander, jedoch in unterschiedlicher thermischer Ankoppelung zum Fühlerheizkörper vorgesehen sind. Statt dessen oder zusätzlich hierzu kann eine solche Fühleranordnung auch unterhalb der Einströmöffnungen bzw. unmittelbar in deren Bereich vorgesehen sein.

Zumindest die der Rückwand der Heizeinheit gegenüberstehende Wandung des Medienspeichers kann annähernd über dessen gesamte Höhe bzw. von seiner Oberseite bis in einen Bereich unterhalb der Heizeinheit einteilig ausgebildet sein; eine solche Ausbildung ist auch für die gegenüberstehende Speicherwandung denkbar, obwohl diese in vorteilhafter Weise oberhalb der Heizeinheit weiter nach außen versetzt sein kann als unterhalb der Heizeinheit, wodurch einerseits günstige Strömungsverhältnisse hinsichtlich des Eintrittes und des Austrittes der Heizeinheit geschaffen werden und andererseits der Medienspeicher an einer Seite im unteren Bereich zurückversetzt ausgebildet ist, so daß eine an dieser Seite stehend arbeitende Person eine bessere Bewegungsfreiheit hat.

An die Unterseite des, eine in sich geschlossene, an der Unterseite im wesentlichen auf voller Weite offene Baueinheit bildenden, Mantels des Medienspeichers kann ein ringförmig bzw. flachschalenförmig grümmter Bodenteil angesetzt sein, dessen Bodenwand zweckmäßig zur offenen Nischenlängsseite der Heizeinheit und/oder zur gegenüberstehenden Speicherwandung flach ansteigt, so daß er praktisch ein gekrümmtes Strömungsleitgleid unmittelbar unterhalb der Eintrittsöffnungen aller Durchlauferhitzer bildet. Des weiteren kann dieser Bodenteil als Sumpf zum Auffangen von Festpartikeln dienen und mit einem Ablaß zur vollständigen Entleerung des Medienspeichers versehen sein. Ausführungsbeispiele der Erfindung sind in den Zeichnungen dargestellt und werden im folgenden näher erläutert. In den Zeichnungen zeigen
- Fig. 1: eine nach der Erfindung an einem Medienspeicher angeordnete Medien-Heizeinheit in teilweise geschnittener Seitenansicht,
- Fig. 2: die Anordnung gemäß Fig. 1 in teilweise geschnittener Draufsicht,
- Fig. 3: einen Ausschnitt der Fig. 1 in Ansicht von rechts und in geringfügig abwandelter Ausgestaltung,
- Fig. 4: die Medien-Heizeinheit für sich in vereinfachter Seitenansicht,
- Fig. 5: einen Ausschnitt der Fig. 4 im Schnitt und in vergrößerter Darstellung,
- Fig. 6: einen Ausschnitt der Fig. 1 in vergrößerter Darstellung und im Schnitt,
- Fig. 7: einen Ausschnitt der Fig. 3 im Schnitt und in Vergrößerter Darstellung,
- Fig. 8: eine weitere Ausführungsform in einer Darstellung entsprechend Fig. 1
- Fig. 9: die Anordnung gemäß Fig. 8 in Draufsicht.

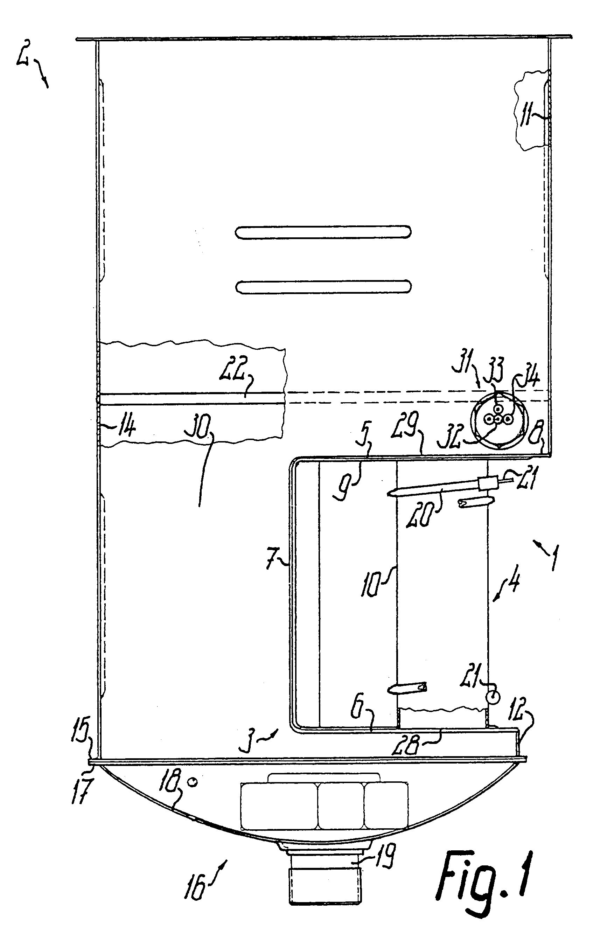

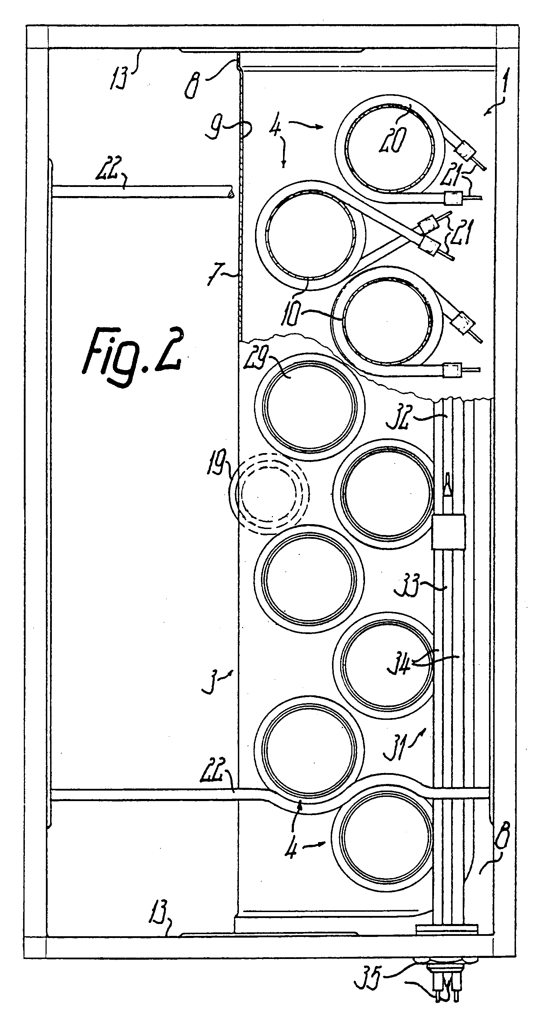

Die erfindungsgemäße Medien-Heizeinheit 1 nach den Fig. 1 - 7 bildet eine mechanisch starr mit einem Medienspeicher 2 unlösbar verbundene bzw. verschweißte Baueinheit, obwohl auch eine lösbare Verbindung der Heizeinheit 1 mit dem Medienspeicher 2 denkbar ist. Der Medienspeicher 2 ist im dargestellten Ausführungsbeispiel ein auf voller Weite an der Oberseite offener Friteusenbehälter für die Aufnahme eines Fritierkorbes, kann aber auch z. B. ein an der Oberseite geschlossener, mit Zu- und Abläufen versehener Heißwasserspeicher oder ein anderer Druckbehälter sein.

Die Heizeinheit 1 weist einen einteilig ausschließlich aus einem einzigen Blechstück durch Abkanten oder Tiefziehen hergestellten, im Vertikalschnitt U-förmigen Träger 3 auf, an dem ein einziger, mehrere oder wie dagestellt, eine Vielzahl von im wesentlichen baugleichen Durchlauferhitzern 4 in im wesentlichen gleichmäßiger Verteilung sowohl über seine Länge wie auch über seine Tiefe angeordnet ist. Die beiden im wesentlichen horizontal liegenden und zueinander parallelen U-Schenkel des Trägers 3 bilden zwei gleich lange Flanschplatten 5, 6, von denen die obere um weniger als den Durchmesser bzw. den Radius eines Durchlauferhitzers breiter als die untere ist. Der die beiden im wesentlichen ebenen Flanschplatten 5, 6 verbindende U-Quersteg des Trägers 3 bildet dessen im wesentlichen ebene bzw. vertikale Rückwand 7, deren Abstand von den am nächsten bei ihr stehenden Durchlauferhitzern 4 annähernd gleich dem entsprechenden Abstand der vorderen Längskante der unteren Flanschplatte 6 von den vordersten Durchlauferhitzern 4 ist. Durch die Flanschplatten 5, 6 und die Rückwand 7 ist ein bandförmig geschlossen durchgehender, in unterschiedlichen und quer zueinanderliegenden Ebenen liegender Befestigungsrand 8 gebildet, der entlang der Längs- und Schmalkanten der Flanschplatten 5, 6 sowie entlang der Endkanten der Rückwand 7 verläuft. Der verhältnismäßig schmale und durchgehend im wesentlichen konstant breite Befestigungsrand 8 ist gegenüber dem innerhalb ihm liegenden, übrigen Plattenteil der jeweiligen Flanschplatte 5, 6 und der Rückwand 7 über eine Abkröpfung etwa um seine Materialdicke nach außen derart abgesetzt, daß er gegenüber diesem durchgehend ebenen Plattenteil 9 im Bereich der Flanschplatten 5, 6 weiter entfernt von der jeweils gegenüberliegenden Flanschplatte und im Bereich der Rückwand 7 zurückversetzt liegt.

An den Flanschplatten 5, 6 sind diese verbindende und den Träger 3 versteifende Querverstrebungen befestigt, die zweckmäßig ausschließlich durch in ihren Abmessungen gleiche Durchlaufrohre 10 der Durchlauferhitzer 4 gebildet sind. Jedes Durchlaufrohr 10 geht vorteilhaft ununterbrochen zwischen beiden Flanschplatte 5, 6 bzw. den zugehörigen abgesetzten Plattenteilen 9 einteilig durch, so daß ein oder beide Enden unmittelbar und ohne jeglichen zusätzlichen Zwischenflansch an der jeweiligen Flanschplatte 5, 6 direkt beispielsweise durch eine Ringschweißnat befestigt sein können, obwohl auch eine lösbare Verbindung beispielsweise nach der EP-A-02 38 955 in manchen Anwendungsfällen denkbar ist, auf die hier wegen weiterer Einzelheiten und Wirkungen Bezug genommen wird. In jedem Fall ist es vorteilhaft, wenn die über ihre Länge durchgehend gleiche Außen- und Innenquerschnitte aufweisenden Durchlaufrohre 10 lediglich durch Strangabschnitte von einem entsprechend lang vorgefertigten Rohr gebildet sein können.

Im dargestellten Ausführungsbeispiel ist der Medienspeicher 2 im wesentlichen durch miteinander verschweißte Wandungen 11 bis 14 gebildet, die plattenförmig ausgebildet und im Winkel derart aneinandergesetzt sind, daß sie die aufrechten bzw. die vertikalen Wandungen bilden. An einer Längsseite ist die Außenbegrenzung des Medienspeichers 2 durch zwei zwar parallele, aber gegeneinander rechtwinklig zu ihren Ebenen etwa um die Differenz der Breite der Flanschplatten 5, 6 versetzte Wandungen 11, 12 gebildet, von denen die obere von der freien Längskante der oberen Flanschplatte 5 bis zur Oberseite des Medienspeichers 2 und die untere von der entsprechenden Längskante der unteren Flanschplatte 6 bis zu einem unteren Flanschrand 15 reicht, wobei diese untere Wandung 12 sehr niedrig und daher in Längsrichtung des Trägers 3 nur streifenförmig ist.

Diese, ebenso wie die Heizeinheit 1 beispielsweise an der vorderen Längsseite bzw. an der Bedienungsseite des Medienspeichers 2 stehenden, gesonderten Wandungen 11, 12 sind über zwei im Winkel zu ihnen stehende sowie über ihre gemeinsame Höhe einschließlich der Höhe des Trägers 3 durchgehende endseitige Wandungen 13 mit einer gegenüberstehenden und zu ihnen parallelen Wandung 14 verbunden, welche ebenso wie die Wandungen 13 bis zur Oberseite des Medienspeichers 2 durchgeht und am unteren Ende in den gemeinsamen Flanschrand 15 übergeht. Die Wandungen 13 sind im dargestellten Ausführungsbeispiel entsprechend dem Profil des Trägers 3 ausgeschnitten, so daß der Träger 3 mit seinen Enden in diese Ausschnitte eingreifen kann und er an seinen Enden offenbleibt; es ist aber auch denkbar, eine oder beide Wandungen 13 über die Enden des Trägers 3 hinwegzuführen und diesen dadurch an diesen Enden zu verschließen, so daß er wannenartig nur an einer einzigen Seite offen ist. Der Befestigungsrand 8 des Trägers 3 ist mit seiner freien Kante zweckmäßig an mehrere oder alle der Wandungen 11 bis 14 so im Winkel angesetzt, daß jeweils eine von zwei im Winkel zueinander liegenden Längskanten begrenzte Hohlkehle geschaffen ist, in welche eine Schweißnat gelegt werden kann.

Durch die beschriebene Ausbildung bildet die Heizeinheit 1 ein in sich verstrebtes Versteifungsprofil für den Medienspeicher 2, das im wesentlichen vollständig innerhalb des Grundrisses der Wandungen 11 bis 14 vorgesehen ist, also nach außen nicht über den Medienspeicher 2 vorsteht. Da die Heizeinheit 1 im wesentlichen unterhalb des im Falle einer Friteuse für die Aufnahme eines Fritierkorbes dienenden Nutzraumes des Medienspeichers 2 liegt, bildet sie unterhalb dieses Nutzraumes desweiteren einen in den Medienspeicher 2 hineinragenden Verdrängungskörper, durch welchen trotz im wesentlichen durchgehender aufrechter Wandungen die Horizontalquerschnitte des Medienspeichers 2 unterhalb des Nutzraumes wesentlich reduziert sind, so daß das Füllvolumen für den Medienspeicher 2 relativ niedrig gehalten werden kann. Außerdem wird dadurch auch ein verhältnismäßig enger, von der Unterseite des Nutzraumes ausgehender Rückströmkanal geschaffen, der an einer Seite von der Rückwand 7 und an der anderen Seite von der gegenüberliegenden, über den Nutzraum und den Rückströmkanal im wesentlichen eben durchgehenden Wandung 14 begrenzt ist. Der Rückströmkanal ist nach Art einer Revisionsöffnung so breit gewählt, daß seine sowie die Reinigung des Bodenteiles ohne weiteres von oben her möglich sind und die Sauberkeit des Gerätes kontrollierbar ist.

An den Unterseiten der Wandungen 12, 13, 14 bzw. an deren gemeinsamen, ringartig durchgehend nach außen abgewinkelten Flanschrand 15 ist ein Bodenteil 16 mit einem im wesentlichen deckungsgleichen Flanschrand 17 beispielsweise durch Schweißung befestigt. Der Bodenteil 16 weist eine rinnen- bzw. schalenförmig gekrümmte Bodenwand 18 auf, die mit ihren flach ansteigenden Schalenrändern unmittelbar in den Flanschrand 17 übergeht und an ihrer tiefsten Stelle mit einem Ablaßstutzen 19 versehen ist, an dem beispielsweise ein Sperrventil befestigt werden kann.

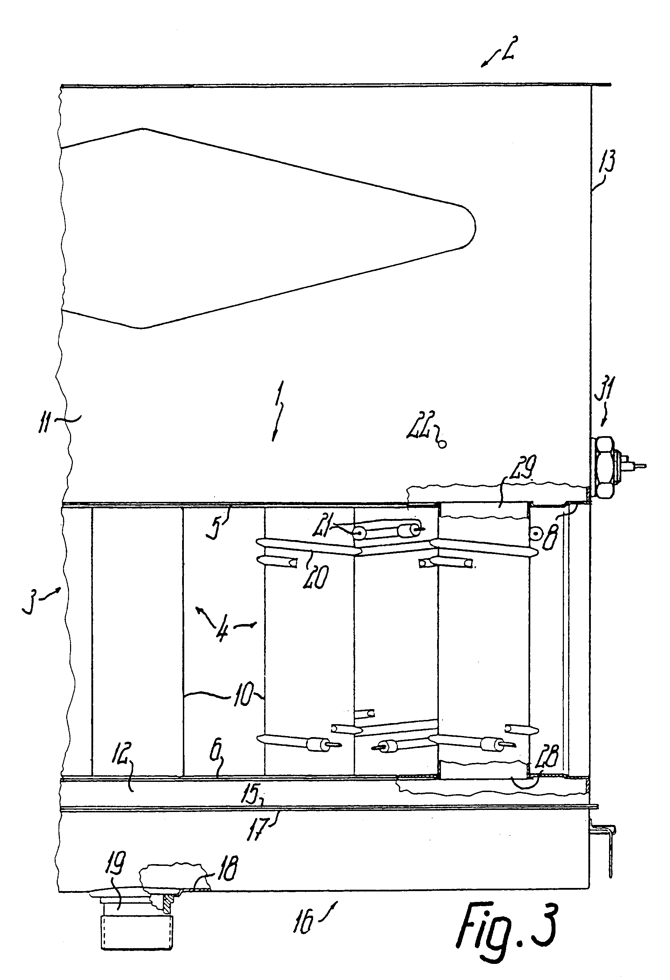

Jedes Durchlaufrohr 10 ist mit einem einzigen Heizwiderstand 20 in Form eines annähernd zwischen beiden Flanschplatten 5, 6 durchgehenden Rohrheizkörpers versehen, der den Außenumfang des Durchlaufrohres 10 wendelförmig umgibt, wobei Ausgestaltungen nach der genannten europäischen Patentanmeldung denkbar sind. Durch den Außendurchmesser der Wendel des jeweiligen Heizwiderstandes 20 ist der Außendurchmesser jedes Durchlauferhitzers 4 bestimmt. Wie insbesondere Fig. 2 zeigt, sind die Durchlauferhitzer 4 in zwei zueinander und zur Rückwand 7 parallelen Reihen derart angeordnet, daß jeder Durchlauferhitzer der hinteren Reihe jeweils in die Lücke zwischen zwei Durchlauferhitzern 4 der vorderen Reihe eingreift und sein Außenumfang nur mit geringem Spaltabstand von den Außenumfängen dieser beiden vorderen Durchlauferhitzer liegt.

Der lichte Abstand zwischen benachbarten Durchlauferhitzern einer Reihe ist kleiner als deren Außendurchmesser und liegt etwa in der Größenordnung der Hälfte dieses Außendurchmessers. Die Anzahl an Durchlauferhitzern in der hinteren Reihe ist um einen Durchlauferhitzer kleiner als diejenige in der vorderen Reihe, so daß sich günstige Strömungsverhältnisse ergeben. Außerdem wird durch die beschriebene Ausbildung erreicht, daß wenigstens ein Teil der von den Außenumfängen der Heizwiderstände 20 abstrahlenden Wärme auf die benachbarten Durchlaufrohre 10 bzw. die Rückwand 7 wirkt und dadurch als effektive Heizleistung ebenfalls zur Verfügung steht.

Jeder Heizwiderstand 20 weist zwei im wesentlichen zur offenen Rinnenseite des Trägers 3 abstehende obere und untere Anschlußenden 21 auf, die vollständig innerhalb des Trägers 3 liegen. Die Anschlußenden 21 jedes Durchlauferhitzers 4 der hinteren Reihe sind zwischen den beiden zugehörigen benachbarten Durchlauferhitzern der vorderen Reihe nach vorne geführt, so daß alle Anschlußenden 21 im wesentlichen in einer gemeinsamen Verdrahtungsebene liegen. Die Heizwiderstände der hinteren Reihe weisen dabei zweckmäßig entgegengesetzte Wendelsteigung gegenüber den Heizwiderständen der vorderen Reihe auf, so daß jeweils zwei im Bereich der gleichen Enden der zugehörigen Durchlaufrohre 10 zweier benachbarter Durchlauferhitzer 4 der vorderen und der hinteren Reihe liegende Anschlußenden 21 unmittelbar benachbart zueinander etwa in gleicher Höhe vorgesehen sind, während die beiden anderen Anschlußenden 21 dieser beiden Durchlauferhitzer in Draufsicht gemäß Fig. 2 im Winkel aufeinander zu verlaufen.

Die Unterseite des Nutzraumes des Medienspeichers 2 ist durch eine Art Rost begrenzt, welcher durch parallel nebeneinander liegende, zylindrische Versteifungsstäbe 22 bzw. gleiche Versteifungsprofile gebildet ist, die mit ihren Enden in gleicher Höhe an den Wandungen 11, 14 befestigt sind und in geringem Abstand oberhalb der oberen Flanschplatte 5 liegen. Hierbei genügen z. B. zwei Versteifungsstäbe 22, deren Zwischenabstand größer als ihr Abstand zur jeweils benachbarten Wandung 13 ist. In Draufsicht gemäß Fig. 2 weisen diese Versteifungsstäbe 22 oberhalb der Heizeinheit 1 S-förmig gekrümmte Abschnitte derart auf, daß sie in Draufsicht die lichten Querschnitte der zugehörigen Durchlaufrohr 10 nicht kreuzen, sondern umgehen bzw. umrunden und dadurch die Strömung nicht stören.

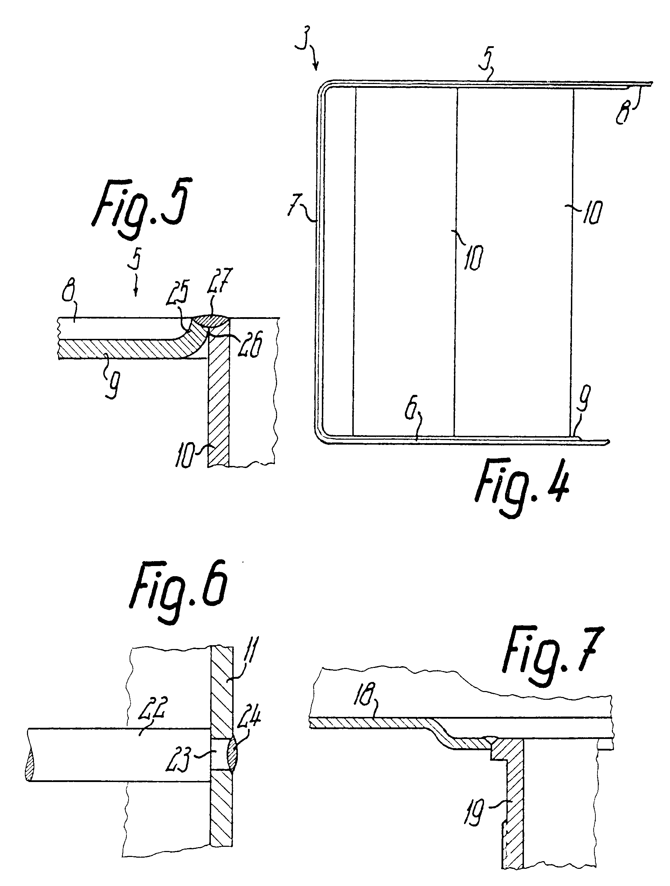

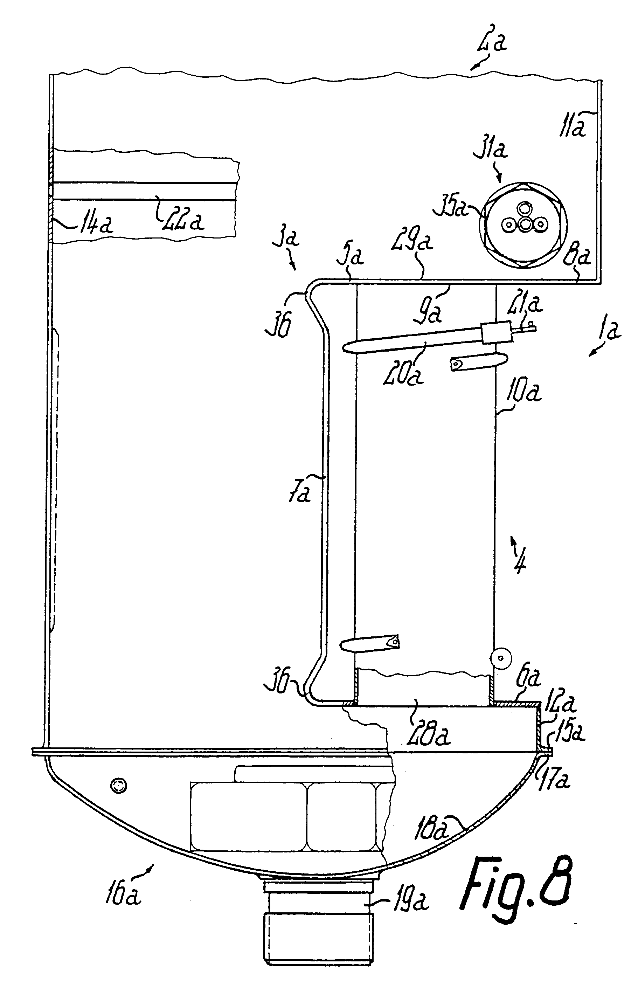

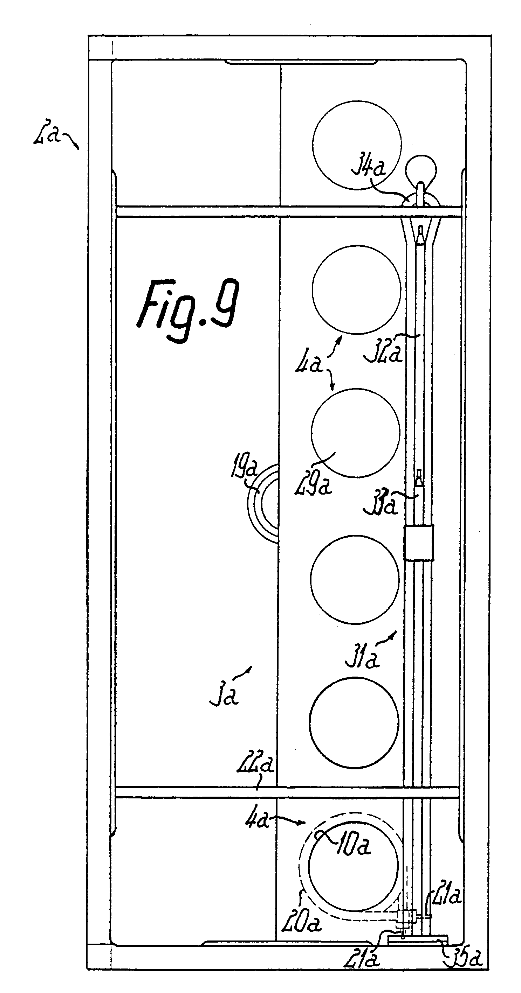

In Fig. 6 ist erkennbar, wie jedes Ende des Versteifungsstabes 22 als im Durchmesser reduzierter Steckzapfen 23 ausgebildet ist, der in eine Durchgangsbohrung der zugehörigen Wandung 11 eingesetzt ist und dessen Länge höchstens so groß wie die Dicke dieser Wandung 11 ist. Von der Außenseite der Wandung 11 ist im Bereich der Stirnfläche des Steckzapfens 23 ein punktförmiger Schweißkopf 24 angebracht, welcher einerseits den Versteifungstab 22 festlegt und andererseits die Bohrung dicht verschließt. In Fig. 7 ist die Befestigung des Ablaßstutzens 19 erkennbar, der am oberen Ende einen erweiterten Ringbund aufweist, mit welchem er in eine eng angepasste Bohrung in einer ringnapfförmig nach unten herausgeformten Zone der Bodenwand 18 einegesetzt ist. Von der Innenseite der Bodenwand 18 ist der Ablaßstutzen 19 mit einer ringförmigen Stirnnaht verschweißt.

Die Befestigung des jeweiligen Endes jedes Durchlaufrohres 10 an der zugehörigen Flanschplatte 5 bzw. 6 ist in Fig. 5 erkennbar. Für die Aufnahme dieses Endes weist die Flanschplatte 5 eine eng angepasste Stecköffnung 26 auf, die von einem aus dem Plattenteil 9 herausgeformten ringförmigen Kragen 25 begrenzt ist, der annähernd bis in die Ebene der von der gegenüberliegenden Flanschplatte abgekehrten Seite des Befestigungsrandes 8 reicht. Nach dem Einstecken des Durchlaufrohres 10 bilden dessen Ende und der Kragen 25 zwei ringförmig ineinander liegende Stirnflächen, auf die eine gemeinsame ringförmige Stirnnaht 27 geschweißt ist.

Durch die beschriebene Ausbildung bildet die Heizeinheit 1 an der Unterseite eine Vielzahl rasterartig in einer gemeinsamen Ebene unmittelbar oberhalb des zugehörigen ansteigenden Teiles der Bodenwand 18 liegender Eintrittsöffnungen 28 und eine entsprechende Anzahl darüber liegender Austrittsöffnungen 29, wobei das zu erhitzende Medium in den an ihren Innenseiten völlig glatten Durchlaufrohren 10 durch Thermosyphonwirkung nach oben bewegt wird. Da sämtliche Heizwiderstände 20 außerhalb der medienführenden Bereiche bzw. trocken angeordnet sind, werden sie nicht unmittelbar vom Medium beaufschlagt.

Das nach oben aus der Heizeinheit 1 austretende, erwärmte Medium strömt im Kreislauf durch den darüberliegenden Teil des Medienspeichers 2 unter Umlenkung wieder nach unten in den nahe benachbart zu den Austrittsöffnungen 29 liegenden Rückströmkanal 30 entlang der Bodenwand 18 zurück in die Eintrittsöffnungen 28. Da die Bodenwand 18 mit ihrem auf der einen Seite ihres tiefsten Scheitels liegenden Teil unterhalb des Rückströmkanales 30 und mit dem anderen Teil unterhalb der Eintrittsöffnungen 28 liegt, ergeben sich besonders günstige Strömungsverhältnisse.

Unmittelbar oberhalb der Austrittsöffnungen 29 bzw. unmittelbar unterhalb der Versteifungsstäbe 22, jedoch - in Draufsicht gemäß Fig. 2 - außerhalb der lichten Querschnitte im wesentlichen aller Durchlauferhitzer 4 ist eine Fühleranordnung 31 vorgesehen, die im wesentlich zwischen der vorderen Reihe von Durchlauferhitzern 4 und der Wandung 11 liegt, sich über dem größten Teil der Länge dieser Reihe sowie im wesentlichen parallel zu dieser erstreckt und nur mit einem Ende an einer Wandung 13 befestigt ist, so daß sie im wesentlichen frei ausragt.

Diese Fühleranordnung 31 weist zwei stab- bzw. rohrförmige, im wesentlichen geradlinige und zueinander parallele Temperaturfühler 32, 33 auf, die nahe benachbart zueinander bzw. einander entlang einer Mantellinie berührend vorgesehen sind, wobei ein Temperaturfühler 33 über dem anderen liegt.

Für mindestens einen der Temperaturfühler ist eine Beheizung 34 in Form eines haarnadelförmig gekrümmten Rohrheizkörpers vorgesehen, zwischen dessen beiden Haarnadelschenkeln einer der beiden Temperaturfühler derart angeordnet ist, daß er mit diesen Haarnadelschenkeln in einer gemeinsamen Axialebene liegt. Die beiden Temperaturfühler 32, 33 weisen zweckmäßig unterschiedliche Länge auf, wobei der oberhalb des Temperturfühlers 32 weiter entfernt von der Beheizung 34 liegende und diese nicht direkt, wie der Temperaturfühler 32, berührende Temperaturfühler 33 kürzer, nämlich etwa halb so lang wie der Temperaturfühler 32 sein kann. Die Temperaturfühler 32, 33 sind mit der Beheizung 34 zu einer gemeinsamen Baueinheit zusammengefasst, die mit einer Verschraubung 35 lösbar an der zugehörigen Wandung 13 befestigt ist. Die ebenso wie die Beheizung 34 vom Medium umspülten Temperaturfühler 32, 33 sind Bestandteile zweier geschlossener, hydraulischer Ausdehnungssysteme und über nicht näher dargestellte Kapillarleitungen mit Druckdosen verbunden, von denen mindestens eine den Kontakt eines taktend arbeitenden Leistungssteuergerätes oder eines Reglers für wenigstens einen Teil der Heizwiderstände 20 sowie für die Beheizung 34 beeinflusst, die nicht als Beheizung für das Medium angesprochen werden kann, da ihr Anteil an der Gesamtleistung der Heizeinheit 1 vernachlässigbar gering ist. Der andere, thermisch insbesondere enger an die Beheizung 34 angekoppelte und daher zwischen den Schenkeln der haarnadelförmigen Rohrheizkörper-Beheizung 34 anliegende sowie längere Temperaturfühler 32 ist als Begrenzerfühler eines Temperaturbegrenzers für den Überhitzungsschutz vorgesehen und dient zum Abschalten einer ausreichenden Anzahl von Durchlauferhitzern oder aller Durchlauferhitzer in Notfällen, wie beispielsweise durch Ausfall des vom Temperaturfühler 33 beeinflußten, temperatureinstellbaren Temperaturreglers auftreten können.

In den Fig. 8 und 9 sind für einander entsprechende Teile die gleichen Bezugszeichen wie in den Fig. 1 bis 7, jedoch mit dem Index "a" verwendet.

Bei der Ausführungsform nach den Fig. 8 und 9 ist nur eine einzige Reihe von Durchlauferhitzern 4a vorgesehen, die somit zugleich die vorderste und hinterste Reihe bildet. Die Anschlußenden 21a des Heizwiderstandes 20a jedes Durchlauferhitzers 4a sind in diesem Fall annähernd rechtwinklig zueinander ausgerichtet, obgleich auch eine parallele Ausrichtung denkbar ist.

Der Befestigungsrand 8a liegt im Bereich jeder Flanschplatte 5a bzw. 6a in der Ebene von deren die Durchlaufrohre 10a aufnehmenden Plattenteil 9a. Die Versteifung des Trägers 3a wird in diesem Fall auch durch sickenartige Profilausformungen 36 erreicht, die im Übergangsbereicht zwischen den Flanschplatten 5a, 6a und der Rückwand 7a vorgesehen sind und als federnde Dehnungsausgleichsprofile über deren Außenseite, nicht jedoch über die voneinander abgegrenzten Seiten der Flanschplatten 5a, 6a, vorstehen.

## Patentansprüche

1. Medien-Heizeinheit als vormontierte Baueinheit (1) zur Verbindung mit Wandungsteilen (11, 12, 13) eines Medienspeichers (2), mit einem Träger (3), der zur Verbindung mit mindestens einem Durchlauferhitzer (4) für das Medium zwei einander gegenüberliegende Flanschplatten (5, 6) sowie in deren Bereich mindestens je eine Ein- und Austrittsöffnung (28, 29) zur Verbindung mit dem jeweiligen Durchlauferhitzer (4) aufweist, dadurch gekennzeichnet, daß der Träger (3) der vormontierten Baueinheit (1) eine die Flanschplatten (5, 6) verbindende Rückwand (7) aufweist, die mit den Flanschplatten (5, 6) den im Querschnitt U- bzw. nischenförmigen Träger (3) mit einem entlang der Kanten der Flanschplatten (5, 6) und der Rückwand (7) verlaufenden durchgehenden Befestigungsrand (8) zur Befestigung an dem vormontierten Medienspeicher (2) im Bereich eines durch den Träger (3) zu verschließenden fensterartigen Ausschnittes bildet, wobei der Träger (3) mit dem Befestigungsrand (8) an den Wandungsteilen (11, 12, 13) des Medienspeichers (2) anzusetzen und zu befestigen ist sowie dabei die Ein- und Austrittsöffnungen (28, 29) des jeweiligen Durchlauferhitzers (4) so an den Medienspeicher (2) anzuschließen sind, daß das Medium im Kreislauf aus dem Medienspeicher (2) in den Durchlauferhitzer (4), durch diesen zurück in den Medienspeicher (2) und wieder zurück in den Durchlauferhitzer (4) strömen kann.

2. Heizeinheit nach Anspruch 1, dadurch gekennzeichnet, daß die Rückwand (7) mit den quer zu ihr liegenden Flanschplatten (5, 6) im Querschnitt, insbesondere einteilig, ein Profil aus Blech oder dgl. bildet, dessen einander gegenüberliegende Flanschplatten (5, 6) durch mindestens einen Durchlauferhitzer (4) gegeneinander versteift sind und/oder das im Querschnitt rinnenartig U-förmig an mindestens drei Seiten bzw. wannenartig an fünf Seiten Begrenzungen einer Aufnahme für den jeweiligen Durchlauferhitzer (4) bildet.

3. Heizeinheit nach Anspruch 1 oder 2, dadurch gekennzeichnet, daß mindestens eine Flanschplatte (5, 6) und/oder die Rückwand (7) den insbesondere bandförmig durchgehenden Befestigungsrand (8) zur Befestigung am Medienspeicher (2) im Randbereich der Begrenzung des fensterartigen Ausschnittes in mindestens einer Speicher-Wandung (13) aufweist, wobei die Baueinheit (1) vorzugsweise zur Befestigung nach Art eines frei in den Medienspeicher (2) vorstehenden Kragarmes bzw. eines Verdrängungskörpers ausgebildet ist.

4. Heizeinheit nach einem der vorhergehenden Ansprüche, dadurch gekennzeichnet, daß mindestens ein Durchlauferhitzer (4) mit einem Durchlaufrohr (10) im Bereich von dessen jeweiligem Ende an einer Flanschplatte (5, 6) befestigt ist und daß insbesondere die im Abstand vom jeweiligen Durchlauferhitzer (4) liegende beheizte Rückwand (7), mindestens ein Durchlauferhitzer und ggf. die übrigen, quer zur jeweiligen Flanschplatte (5, 6) liegenden Wandteile des Trägers (3) durch starre Verbindung miteinander im wesentlichen ausschließlich die vormontierte Baueinheit (1) zur Befestigung an darüber und darunter anschließende Wandungsabschnitte (11, 12, 13) des Medienspeichers (2) bilden und/oder als Versteifungskörper für den Medienspeicher (2) ausgebildet sind.

5. Heizeinheit nach einem der vorhergehenden Ansprüche, dadurch gekennzeichnet, daß an mindestens einer Flanschplatte (5, 6) der jeweilige Durchlauferhitzer (4), insbesondere von seiner zugehörigen Endfläche her, befestigt ist und daß vorzugsweise mindestens eine Flanschplatte (5, 6) im Bereich des Durchlaufrohres (10) bzw. der Durchlaufrohre (10) einen über Abkröpfungen zum gegenüberliegenden Ende des jeweiligen Durchlauferhitzers (4) abgesetzten Plattenteil (9) aufweist, an dem das zugehörige Befestigungsende des jeweiligen Durchlaufrohres (10) befestigt ist und der insbesondere über die Rückwand (7) zwischen beiden Flanschplatten (5, 6) ununterbrochen durchgeht bzw. den über die Außenkante des Trägers (3) durchgehenden, abgesetzten Befestigungsrand (8) bildet.

6. Heizeinheit nach einem der vorhergehenden Ansprüche, dadurch gekennzeichnet, daß mindestens eine Flanschplatte (5, 6) für ein Durchlaufrohr (10) des jeweiligen Durchlauferhitzers (4) eine eng an ein Befestigungsende dieses Durchlaufrohres angepaßte Stecköffnung (26) aufweist, in die das Befestigungsende insbesondere mindestens über die zugehörige Materialdicke der Flanschplatte (5, 6), vorzugsweise in einen gleich wie dieses Befestigungsende vorstehenden Kragen (25), eingesetzt ist.

7. Heizeinheit nach einem der vorhergehenden Ansprüche, dadurch gekennzeichnet, daß im Übergang zwischen der Rückwand (7a) und mindestens einer Flanschplatte (5a, 6a) eine sickenartig über die Rückwand (7a) vorstehende Profilausformung (36) vorgesehen ist, die vorzugsweise spitzwinklig winkelförmige Profilschenkel aufweist.

8. Heizeinheit nach einem der vorhergehenden Ansprüche, dadurch gekennzeichnet, daß mehrere, im wesentlichen gleiche Durchlauferhitzer (4) in mindestens einer Längsreihe, insbesondere auf Lücke in mindestens zwei zueinander etwa parallelen Längsreihen, vorzugsweise derart angeordnet sind, daß der mittlere Abstand zwischen diesen beiden Längsreihen kleiner als der Außendurchmesser des jeweiligen Durchlauferhitzers (4) ist.

9. Heizeinheit nach einem der vorhergehenden Ansprüche, dadurch gekennzeichnet, daß am Außenumfang des jeweiligen Durchlauferhitzers (4), insbesondere auf dem Außenumfang eines zugehörigen Durchlaufrohres (10), ein Heizwiderstand (20), insbesondere ein wendelförmig durch Lötung oder dergleichen befestigter Rohrheizkörper, angeordnet ist und daß vorzugsweise alle Anschlußenden (21) von Heizwiderständen (20) im wesentlichen auf der von der Rückwand (7) abgekehrten Seite der Durchlauferhitzer (4) liegen.

10. Heizeinheit nach einem der vorhergehenden Ansprüche, dadurch gekennzeichnet, daß mindestens eine vormontierte Baueinheit (1) an dem Medienspeicher (2) befestigt ist und einen in den Medienspeicher (2) im wesentlichen berührungsfrei hineinragenden, kastenförmigen Vorsprung bildet, unterhalb und/oder oberhalb von welchem der Medienspeicher (2) im wesentlichen konstante Innenquerschnitte aufweist.

11. Heizeinheit nach einem der vorhergehenden Ansprüche, dadurch gekennzeichnet, daß ihr mindestens ein oberhalb und quer zur Rückwand (7) liegender sowie zugehörige Wandungsabschnitte (11, 14) verbindender Versteifungsstab (22) zugeordnet ist, der vorzugsweise in Draufsicht um mindestens eine Austrittsöffnung (29) eines unter ihm liegenden Durchlauferhitzers (4) gekrümmt ist.

12. Heizeinheit nach einem der vorhergehenden Ansprüche, dadurch gekennzeichnet, daß unmittelbar oberhalb von mindestens einer Medien-Austrittsöffnung (29) der Heizeinheit mindestens ein Temperaturfühler (32, 33) eines Temperatur-Einstellgerätes angeordnet ist, wobei vorzugsweise zwei rohrförmige, mit Ausdehnungsflüssigkeit gefüllte Temperaturfühler (32, 33) unmittelbar benachbart zueinander angeordnet und in unterschiedlicher thermischer Ankoppelung einem Fühlerheizkörper (34), wie einem haarnadelförmigen Rohrheizkörper, ausgesetzt sind.

13. Heizeinheit nach einem der vorhergehenden Ansprüche, dadurch gekennzeichnet, daß in geringem Abstand unmittelbar unterhalb einer unteren Flanschplatte (6) ein vorzugsweise flachschalen- bzw. rinnenförmig gekrümmter Sumpf vorgesehen ist, dessen Bodenwand (18) unterhalb mindestens einer Medien-Eintrittsöffnung (28) der Heizeinheit liegt und/oder zu einer offenen Seite des Trägers (3) ansteigt.

## Claims

1. Medium heating unit as a preassembled constructional unit (1) for connection to wall parts (11, 12, 13) of a medium reservoir (2), with a support (3) which, for connection to at least one continuous flow heater (4) for the medium, has two facing flange plates (5, 6) and in the vicinity thereof in each case at least one inlet and outlet (28, 29) for connection to the particular continuous flow heater (4), characterized in that the support (3) of the preassembled constructional unit (1) has a rear wall (7) connecting the flange plates (5, 6) and which with said flange plates (5, 6) forms the cross-sectionally U or recess-shaped support (3) with a through fixing edge (8) passing along the edges of the flange plates (5, 6) and the rear wall (7) for fling to the preassembled medium reservoir (2) in the vicinity of a window-like cutout to be closed by the support (3), which is to be fixed with the fixing edge (8) to the wall parts (11, 12, 13) of the medium reservoir (2) and the inlet and outlet (28, 29) of the continuous flow heater (4) are to be connected to the medium reservoir (2) in such a way that the medium can flow in circuit from out of the medium reservoir (2) into the continuous flow heater (4), back through the latter into the medium reservoir (2) and then back into the continuous flow heater.

2. Heating unit according to claim 1, characterized in that the rear wall (7) with the flange plates (5, 6) directed transversely thereto in cross-section and in particular in one piece forms a profile of sheet metal or the like, whose facing flange plates (5, 6) are mutually stiffened by at least one continuous flow heater (4) and/or cross-sectionally in channel-like, U-shaped manner on at least three sides or in trough-like manner on five sides forms boundaries of a receptacle for the particular continuous flow heater (4).

3. Heating unit according to claim 1 or 2, characterized in that at least one flange plate (5, 6) and/or the rear wall (7) has the in particular strip-like, through fixing edge (8) for fixing to the medium reservoir (2) in the marginal area of the boundary of the window-like cutout in at least one reservoir wall (13), the unit (1) preferably being constructed for fling in the manner of a cantilever arm projecting freely into the medium reservoir (2) or a displacement body.

4. Heating unit according to any one of the preceding claims, characterized in that at least one continuous flow heater (4) with a continuous flow tube (10) is feed in the vicinity of its particular end to a flange plate (5, 6) and that in particular the heath rear wall (7) spaced from the continuous flow heater (4), at least one continuous flow heater and optionally the remaining wall parts of the support (3) positioned transversely to the flange plate (5, 6) by rigid connection with one another substantially exclusively form the preassembled unit (1) for fling to wall portions (11, 12, 13) of the medium reservoir (2) connected above and below it and/or are constructed as reinforcing bodies for the medium reservoir (2).

5. Heating unit according to any one of the preceding claims, characterized in that to at least one flange plate (5, 6) is feed the continuous flow heater (4), particularly from its associated end face and that preferably at least one flange plate (5, 6) has in the vicinity of the continuous flow tube or tubes (10) a plate part (9) offset with respect to the facing end of the continuous flow heater (4) and to which is filed the associated fixing end of the continuous flow tube (10) and which in particular passes uninterruptedly over the rear wall (7) between both flange plates (5, 6) or forms the offset fixing edge (8) passing over the outer edge of the support (3).

6. Heating unit according to any one of the preceding claims, characterized in that at least one flange plate (5, 6) for a continuous flow tube (10) of the continuous flow heater (4) has a plug-in opening (26) closely adapted to one fixing end of said tube and in which is inserted the fixing end particularly at least over the associated material thickness of the flange plate (5, 6), preferably in a collar (25) projecting by the same amount as said fixing end.

7. Heating unit according to any one of the preceding claims, characterized in that in the transition between the rear wall (7a) and at least one flange plate (5a, 6a) is provided a profile cutout (36) projecting in fin-like manner over the rear wall (7a) and which preferably has acute-angled, bent profile legs.

8. Heating unit according to any one of the preceding claims, characterized in that several, substantially identical continuous flow heaters (4) are arranged in at least one longitudinal row, particularly in staggered manner in at least two roughly parallel longitudinal rows, preferably in such a way that the central spacing between said two longitudinal rows is smaller than the external diameter of the particular continuous flow heater (4).

9. Heating unit according to any one of the preceding claims, characterized in that on the outer circumference of the particular continuous flow heater (4) and in particular on the outer circumference of an associated continuous flow tube (10), is provided a heating resistor (20), in particular a helical tubular heater fixed by soldering or the like and that preferably all the connection ends (21) of the heating resistors (20) are substantially located on the side of the continuous flow heater (4) remote from the rear wall (7).

10. Heating unit according to any one of the preceding claims, characterized in that at least one preassembled unit (1) is fixed to the medium reservoir (2) and forms a box-like projection projecting in substantially contact-free manner into the reservoir (2) and above and/or below which the medium reservoir (2) has substantially constant internal cross-sections.

11. Heating unit according to any one of the preceding claims, characterized in that with it is associated at least one reinforcing bar (22) connecting the associated wall portions (11, 14) and located above and transversely to the rear wall (7) and which is preferably curved in plan view around the outlets (29) of the continuous flow heater (4) located below it.

12. Heating unit according to any one of the preceding claims, characterized in that immediately above at least one medium outlet (29) of the heating unit is provided at least one temperature sensor (32, 33) of a temperature setting device, there preferably being two tubular, expansion fluid-filled temperature sensors (32, 33) immediately adjacent to one another and with different thermal coupling, which are exposed to a sensor heater (34), such as a hairpin-shaped tubular heater.

13. Heating unit according to any one of the preceding claims, characterized in that at a limited distance directly below the lower flange plate (6)
is provided a preferably flat shell-shaped or channel-like sump, whose base wall (18) is below at least one medium inlet (28) of the heating unit and/or rises towards an open side of the support (3).

## Revendications

1. Unité de chauffage de fluides sous forme d'une unité modulaire (1) préassemblée, destinée à être reliée à des parties de parois (11, 12, 13) d'un réservoir de fluide (2), comprenant un support (3) qui, en vue de la liaison à au moins un dispositif de chauffage à écoulement (4) pour le fluide, comporte deux plaques-brides ou plateaux (5, 6) situés l'un à l'opposé de l'autre, de même que, dans la zone de ces plateaux, au moins une ouverture d'entrée et au moins une ouverture de sortie (28, 29) pour le raccordement au dispositif de chauffage à écoulement (4) concerné, caractérisée en ce que le support (3) de l'unité modulaire (1) préassemblée possède une paroi arrière (7), reliant les plateaux (5, 6), qui forme avec les plateaux (5, 6) le support (3) de section droite en U ou en forme de niche, présentant un bord de fixation (8) continu, longeant les bords des plateaux (5, 6) et de la paroi arrière (7) et servant à la fixation de l'unité de chauffage au réservoir de fluide (2) préassemblé au droit d'une découpe semblable à une fenêtre, devant être fermée par le support (3), lequel est à disposer et à fixer par le bord de fixation (8) aux parties de parois (11, 12, 13) du réservoir de fluide (2), avec raccordement des ouvertures d'entrée et de sortie (28, 29) du dispositif de chauffage à écoulement (4) au réservoir (2), de manière que le fluide puisse s'écouler dans un circuit fermé à partir du réservoir (2) dans le dispositif de chauffage (4), à travers celui-ci pour retourner dans le réservoir (2) et pour ensuite entrer de nouveau dans le dispositif de chauffage (4).

2. Unité de chauffage selon la revendication 1, caractérisée en ce que la paroi arrière (7) forme, ensemble avec les plateaux (5, 6) orientés transversalement par rapport à elle en section droite et avec lesquels cette paroi est en particulier d'un seul tenant, un profil en tôle ou analogue, dont les plateaux (5, 6) situés l'un à l'opposé de l'autre, sont raidis mutuellement par au moins un dispositif de chauffage à écoulement (4) et/ou qui forme, avec des délimitations sur au moins trois côtés pour définir en section droite une gouttière en U ou avec des délimitations sur cinq côtés pour définir une cuve, une réception pour le dispositif de chauffage à écoulement (4) concerné.

3. Unité de chauffage selon la revendication 1 ou 2, caractérisée en ce qu'au moins un plateau (5, 6) et/ou la paroi arrière (7) présente le bord de fixation (8), qui est notamment continu et en forme de bande, pour la fixation au réservoir de fluide (2) dans la zone des bords délimitant la découpe semblable à une fenêtre dans au moins une paroi (13) du réservoir, l'unité modulaire (1) étant réalisée de préférence pour être fixée à la façon d'un bras en porte-à-faux ou d'un corps déplaceur faisant librement saillie dans le réservoir de fluide (2).

4. Unité de chauffage selon une des revendications précédentes, caractérisée en ce qu'au moins un dispositif de chauffage à écoulement (4) avec un tube d'écoulement (10) sont fixés dans la région de l'extrémité concernée à un plateau (5, 6) et que notamment la paroi arrière (7), laquelle est chauffée et située à distance du dispositif de chauffage à écoulement (4) en question, au moins un dispositif de chauffage à écoulement et, éventuellement, les autres parties de parois du support (3) orientées transversalement au plateau (5, 6) concerné, du fait qu'ils sont rigidement reliés entre eux, constituent, pour l'essentiel exclusivement, l'unité modulaire (1) préassemblée à fixer à des portions de parois (11, 12, 13) qui s'y raccordent au-dessus et au-dessous du réservoir de fluide (2) et/ou sont réalisés comme des corps raidisseurs pour ce réservoir (2).

5. Unité de chauffage selon une des revendications précédentes, caractérisée en ce que le dispositif de chauffage à écoulement (4) est fixé à au moins un plateau (5, 6), en particulier à partir de sa face d'extrémité correspondante, et que, de préférence, au moins un plateau (5, 6) présente, dans la région du tube d'écoulement (10) ou des tubes d'écoulement (10), une partie de plateau (9) décalée par des coudes par rapport à l'extrémité opposée du dispositif de chauffage (4) concerné, partie de plateau à laquelle est fixée l'extrémité de fixation correspondante du tube d'écoulement (10) en question, et qui s'étend notamment de façon ininterrompue par la paroi arrière (7) entre les deux plateaux (5, 6) en formant le bord de fixation (8) décalé longeant tout le bord extérieur du support (3).

6. Unité de chauffage selon une des revendications précédentes, caractérisée en ce qu'au moins un plateau (5, 6) présente, pour un tube d'écoulement (10) d'un dispositif de chauffage à écoulement (4), une ouverture d'emboîtement (26) étroitement adaptée à une extrémité de fixation de ce tube d'écoulement et dans laquelle cette extrémité de fixation est disposée notamment sur une distance égale à l'épaisseur correspondante du plateau (5, 6), de préférence dans un collet (25) faisant saillie dans la même mesure que cette extrémité de fixation.

7. Unité de chauffage selon une des revendications précédentes, caractérisée par la prévision, dans la transition entre la paroi arrière (7a) et au moins un plateau (5a, 6a), d'une conformation profilée (36) qui dépasse à la façon d'une moulure de la paroi arrière (7a) et présente des ailes de profil formant de préférence un angle aigu entre elles.

8. Unite de chauffage selon une des revendications précédentes, caractérisée en ce que plusieurs dispositifs de chauffage à écoulement (4), essentiellement identiques, sont disposés en au moins une rangée longitudinale, en particulier en quinconce en au moins deux rangées longitudinales à peu près parallèles entre elles, de préférence de manière que la distance moyenne entre ces deux rangées longitudinales soit plus petite que le diamètre extérieur du dispositif de chauffage à écoulement (4) concerné à chaque fois.

9. Unité de chauffage selon une des revendications précédentes, caractérisée en ce qu'une résistance chauffante (20), constituant en particulier un corps tubulaire chauffant de forme en hélice, fixé par brasage ou analogue, est disposé à la périphérie extérieure du dispositif de chauffage à écoulement (4), en particulier sur la périphérie extérieure d'un tube d'écoulement (10) correspondant, et que, de préférence, toutes les extrémités de raccordement ou connexions (21) des résistances chauffantes (20) sont situées pour l'essentiel du côté des dispositifs de chauffage (4) éloigné de la paroi arrière (7).

10. Unité de chauffage selon une des revendications précédentes, caractérisée en ce qu'au moins une unité modulaire (1) préassemblée est fixée au réservoir de fluide (2) et constitue une saillie en forme de boîte pénétrant pour l'essentiel sans contact dans le réservoir de fluide (2), saillie au-dessous de laquelle et/ou au-dessus de laquelle le réservoir de fluide (2) présente des sections droites intérieures essentiellement constantes.

11. Unité de chauffage selon une des revendications précédentes, caractérisée en ce qu'il lui est coordonnée au moins une barre raidisseuse (22) placée au-dessus et transversalement à la paroi arrière (7) et reliant entre elles des portions de parois (11, 14) associées, barre qui est de préférence incurvée, dans une vue de dessus, autour d'au moins une ouverture de sortie (29) d'un dispositif de chauffage à écoulement (4) situé sous elle.

12. Unité de chauffage selon une des revendications précédentes, caractérisée en ce qu'au moins un capteur de température (32, 33) d'un appareil de réglage de la température est installé directement au-dessus d'au moins une ouverture de sortie de fluide (29) de l'unité de chauffage, l'appareil de réglage comprenant de préférence deux capteurs de température (32, 33) tubulaires remplis d'un liquide de dilatation et placés à proximité immédiate l'un de l'autre, capteurs qui sont exposés, à travers des couplages thermiques différents, à un corps chauffant de détection (34), tel qu'un corps chauffant tubulaire ayant la forme d'une épingle à cheveux.

13. Unité de chauffage selon une des revendications précédentes, caractérisée en ce qu'un puisard, courbé de préférence en cuvette plate ou en gouttière, est prévu à une faible distance directement sous un plateau inférieur (6), la paroi de fond (18) du puisard étant située au-dessous d'au moins une ouverture d'entrée de fluide (28) de l'unité de chauffage et/ou montant vers un côté ouvert du support (3).
